# EUROPÄISCHE PATENTANMELDUNG

(11) **EP 4 586 222 A1**
(43) Veröffentlichungstag der Anmeldung: **16.07.2025**
(21) Anmeldenummer: 25151269.5
(22) Anmeldetag: 10.01.2025
(51) Int. Cl.: G06V 20/52

(54) **VERFAHREN ZUR ERFASSUNG VON PERSONEN UND/ODER OBJEKTEN IN EINEM ZWEI- ODER DREIDIMENSIONALEN AUFENTHALTSBEREICH**

(30) Priorität: 10.01.2024 DE 102024100659
(71) Anmelder: Nikonov, Alexander, 10365 Berlin (DE)
(72) Erfinder: Nikonov, Alexander, 10365 Berlin (DE)
(74) Vertreter: Limbeck, Achim

(57) **Zusammenfassung**

Die vorliegende Erfindung betrifft eine Verfahren zur Erfassung von Personen- und/oder Objekten in einem zwei- oder dreidimensionalen Aufenthaltsbereich (A), wobei
a) innerhalb des Aufenthaltsbereichs (A) ein oder mehrere Aufenthaltszonen (Z) individuell definierbar und/oder definiert sind, wobei
b) mindestens eine Person und/oder mindestens ein Objekt innerhalb einer definierten Aufenthaltszone (Z) oder mehreren definierter Aufenthaltszonen (Z) mittels mindestens einem Sensor (S) erfasst wird, wobei
c) bei der Erfassung der Person und/oder des Objekts sowohl die cc)die Aufenthaltsposition als auch
dd) der Aufenthaltszeitpunkt und/oder die Aufenthaltsdauer der Person und/oder des Objekts innerhalb einer oder mehrerer Aufenthaltszonen (Z) ermittelt wird.

## Beschreibung

### Technisches Gebiet

Die vorliegende Erfindung betrifft ein Verfahren zur Erfassung von Personen und/oder Objekten in einem zwei- oder dreidimensionalen Aufenthaltsbereich gemäß Patentanspruch 1.

### Stand der Technik

Es sind aus dem Stand der Technik bereits unterschiedliche Verfahren zur Erfassung von Personen- und/oder Objekten in einem zwei- oder dreidimensionalen Aufenthaltsbereich bekannt, wobei Personen und/oder Objekte innerhalb des Aufenthaltsbereichs mittels Sensoren erfasst werden, die die konkrete Aufenthaltsposition ermitteln. Solche Sensoren können beispielsweise optische oder akustische oder elektromagnetische Sensoren sein.

Es sind ferner Verfahren bekannt, die Personenbewegungen im Echtzeit-Format oder den Aufenthaltsort von Personen oder Objekten auf einer Karte darstellen. So wird zum Beispiel der Aufenthaltsort des Sicherheitspersonals bei Museen mittels Erfassung in Echtzeit oder der Aufenthaltsort von Objekten/Paletten in Lagerhäusern dargestellt.

Ein wesentlicher Nachteil bei den bekannten Verfahren ist, dass diese keine Möglichkeit einer differenzierten zeitlichen Erfassung von Personen und/oder Objekten innerhalb festgelegter Aufenthaltszonen bieten. Weiterhin werden lediglich geolokale Personen- oder Objektbewegungen und nur isolierte Aufenthaltspositionen erfasst, ohne eine umfassende Verbindung von Bewegungsdaten mit vorab oder im Nachgang erhobenen oder währenddessen ermittelten Daten durchzuführen.

Ein weiterer Nachteil bekannter Verfahren besteht darin, dass diese keine umfassende Integration von personalisierten und aggregierten Informationen erlauben und keine vorab erhobenen Daten oder eine zielgerichtete Profilbildung ermöglichen.

Zuletzt bieten bekannte Verfahren durch die eingeschränkte Erfassung auch keine Möglichkeit, eine algorithmische Analyse und Auswertung des Bewegungsverhaltens und damit der Festlegung von Bewegungsmustern von Personen- und/oder Objekten abzubilden.

### Darstellung der Erfindung

Aufgabe der vorliegenden Erfindung ist es, ein Verfahren zu schaffen, das eine zeitliche Erfassung von Personen und/oder Objekten innerhalb festgelegter Aufenthaltszonen ermöglicht.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen des erfindungsgemäßen Verfahrens sind in den abhängigen Unteransprüchen angegeben.
a) Das erfindungsgemäße Verfahren zur Erfassung von Personen- und/oder Objekten sieht zunächst vor, dass innerhalb eines Aufenthaltsbereichs ein oder mehrere Aufenthaltszonen individuell definierbar und/oder definiert sind.
   Die Definition der Aufenthaltszonen innerhalb des Aufenthaltsbereichs (beispielsweise ein Raum (Halle, Zimmer, etc.), ein Teil eines Außenbereichs (Gelände, Garten, etc.), kann dabei vorzugsweise durch eine Festlegung mehrerer der jeweiligen Aufenthaltszone zugewiesener Koordinaten innerhalb eines zwei- oder dreidimensionalen Koordinatensystems des Aufenthaltsbereichs erfolgen, wobei selbstverständlich auch andere gängige Methoden zur Definition (Festlegung) einer Aufenthaltszone in Frage kommen. So können innerhalb einer entsprechenden Software beispielsweise bestimmte Aufenthaltszonen mittels geometrischer Figuren (zum Beispiel Rechtecke, Kreise, etc.) auf einem Display angelegt werden. Die Aufenthaltszonen können beliebig angelegt werden und zum Beispiel auf Veranstaltungen, Messen, Einkaufshäusern, Krankenhäusern, Museen, Fitnessstudios, Festivals, große Außenbereiche wie Zoos (sog. Aufenthaltsbereiche) eingerichtet werden.
b) Ein weiterer Verfahrensbestandteil sieht vor, dass mindestens eine Person und/oder mindestens ein Objekt innerhalb einer definierten Aufenthaltszone oder mehreren definierter Aufenthaltszonen mittels mindestens einem Sensor erfasst wird. Die sensorische Erfassung einer Person oder eines Objekts kann dabei beispielsweise mittels eines betätigbaren und/oder berührungslosen Identifizierungsmittels und/oder Lokalisierungsmittels erfolgen, welche von einem entsprechend ausgestalteten Sensor erfasst werden. Die Erfassung kann weiterhin Winkel-basiert sein, wobei der Einfallswinkel von einem Sender zu einem Empfänger zur Lokalisierung dient. Eine Erfassung kann weiterhin Zeit-basiert sein, wobei die Positionsbestimmung über Signallaufzeiten erfolgt. Es kann darüber hinaus auch eine optische Erfassung erfolgen, wobei hier die Nutzung von Licht oder Strahlung erfolgt. Überdies eignet sich zur sensorischen Erfassung gleichermaßen die Auswertung von Kamerabildern oder visuellen Markern. Weiterhin bieten sich akustische oder magnetische Sensoren an, beispielsweise die Erfassung durch Schall- oder Magnetfeldanalyse, wobei die vorgenannten Beispiele einer sensorischen Erfassung keinesfalls erschöpfend sind. Die Erfassung einer Person oder eines Objekts kann auch beispielsweise mittels RFID-Sensortechnik erfolgen, bei dem RFID-Transponder eingesetzt sind, welche durch RFID-Leser erfasst werden.
   Die exakte Positionsbestimmung kann dabei verfahrensgemäß sowohl direkt über den entsprechenden Sensor erfolgen als auch beispielsweise über eine Software (beispielsweise auf einem Computer oder in einer Cloud).
c) Ein weiterer Verfahrensbestandteil sieht vor, bei der Erfassung der Person und/oder des Objekts sowohl aa) die Aufenthaltsposition als auch bb) der Aufenthaltszeitpunkt und/oder die Aufenthaltsdauer der Person und/oder des Objekts innerhalb einer oder mehrerer Aufenthaltszonen ermittelt wird. Dabei kann vorzugsweise jeder Aufenthaltsposition ein Zeitstempel zugeordnet werden, der dann gemeinsam mit der ermittelten Aufenthaltsposition in einer Datenbank gespeichert wird.

In einer besonders vorteilhaften Ausführungsform der Erfindung werden den ermittelten Aufenthaltspositionen der Person und/oder des Objekts während der Erfassung innerhalb des Aufenthaltsbereichs Koordinaten zugewiesen, die auf einem Koordinatensystem des Aufenthaltsbereichs festgelegt sind.

Weiterhin sieht das erfindungsgemäße Verfahren vorteilhafterweise vor, dass nach der Ermittlung mehrerer Aufenthaltspositionen und Aufenthaltszeitpunkte einer Person und/oder eines Objekts eine Bestimmung der Aufenthaltsdauer erfolgt.

Die vorliegende Erfindung hat sicher weiterhin als Ziel gesetzt, ein Verfahren zu schaffen, mittels dem die Bewegung, Position, Entfernung und Verweildauer von Personen und Objekten zu/in bestimmten, vordefinierten Aufenthaltszonen eines Aufenthaltsbereichs analysiert werden kann.

Hierzu sieht die vorliegende Erfindung vorteilhafterweise vor, dass einer erfassten Person und/oder einem erfassten Objekt individualspezifische Daten zuordbar sind oder automatisch zugeordnet werden. Diese Daten können personen- oder objektspezifische Merkmale betreffen, welche im Vorfeld während oder nach einer jedweden Erfassung zunächst erfasst und jeder Person oder jedem Objekt individuell zugewiesen werden, um so beispielsweise eine automatisierte Zuordnung einer erfassten Person und/oder eines erfassten Objekts zu einer bestimmten Kategorie zu ermöglichen. Hierzu können die Daten auch nach Kategorien klassifiziert sein, um so eine automatisierte Zuordnung einer erfassten Person und/oder eines erfassten Objekts zu einer bestimmten Kategorie zu ermöglichen.

Aufgrund der zugeordneten Daten können Methoden und Algorithmen zur Verarbeitung dieser Daten für Verhaltens- und Zielgruppenanalysen sowie für Sicherheitslösungen, Marketingzwecke, einschließlich Lead-Generierung, regionaler Kampagnen und personalisierter Kundenansprache genutzt werden.

Die Daten können über verschiedene Technologien und Methoden erfasst werden, darunter Sensortechnologie (z. B. Bluetooth, UWB, RFID, Kamerasysteme) oder zukünftige technologische Entwicklungen. Diese Vielseitigkeit stellt sicher, dass das System anpassungsfähig und erweiterbar bleibt.

Die Erhebung kann weiterhin durch direkte Beobachtung, durch Interaktionen während der Veranstaltung oder durch Fragebögen vorab, z. B. bei der Registrierung, erfolgen. Die Analyse erfolgt mittels Algorithmen, die sowohl Zielgruppenprofile als auch Zielgruppenpersona erstellen, basierend auf vorab erhobenen und während des Aufenthalts gesammelten oder im Nachgang erhobenen Daten.

So können teilnehmende Personen einer Veranstaltung, eines Einzelhandels, eines Fitnessstudios, Zoos oder Jahrmarkts einem Wohnort gekoppelt werden (vorausgesetzt, diese Daten werden vorher übermittelt). Mithilfe der Aufenthaltsorte und Verweildauer auf Veranstaltungen (z. B. Stand XX Zeit vor Stand YY) kann ermittelt werden, welche Person oder welches Objekt aus welchem Einzugsgebiet die Veranstaltung besucht hat und wie stark das Interesse an einem Produkt, Fitnessgerät, Tier oder Fahrmodul besteht. Diese Personen können kontaktiert oder mit personalisierter Werbung angesprochen werden. Ein Algorithmus evaluiert tag- oder beacon-bezogene Daten (via RFID, BLE, UWB o. ä.) und erstellt anhand von Variablen Kategorien für diese Assets. Die Anwendungs- und Evaluierungsmöglichkeiten sind vielseitig und zukunftsorientiert.

Ein weiterer Bestandteil des Verfahrens sieht vorteilhafterweise vor, dass auf der Basis der Aufenthaltsdauer, der Aufenthaltszeitpunkte und/oder der Aufenthaltspositionen von Personen oder Objekten Bewegungsmuster innerhalb einer oder mehrerer Aufenthaltszonen (Z) ermittelt werden. Die Ermittlung der Aufenthaltsdauer, der Aufenthaltszeitpunkte und/oder der Aufenthaltspositionen und die Ermittlung der Bewegungsmuster erfolgt dabei vorzugsweise in Echtzeit, um vorzugsweise eine dynamische Anpassung der Aufenthaltszonen in Echtzeit durchführen zu können.

Eine Anpassung der Aufenthaltszonen kann erfindungsgemäße beispielsweise in Form einer Ausweitung, einer Verkleinerung und/oder einer Löschung einer vorhandenen Aufenthaltszone und/oder in Form einer Erstellung einer neuen Aufenthaltszone erfolgen.

Weiterhin können auf der Basis der Aufenthaltsdauer, der Aufenthaltszeitpunkte und/oder der Aufenthaltspositionen hochfrequentierte Aufenthaltszonen innerhalb des Aufenthaltsbereichs ermittelt werden, in denen gegenüber einer oder mehreren anderen Aufenthaltszonen eine höhere Anzahl an Personen oder Objekte erfasst werden.

Daraus resultierend können Maßnahmen getroffen werden, um diese Aufenthaltsbereiche/-zonen zu optimieren und/oder zum Beispiel Wegeleitsysteme zu entwickeln sowie aus Marketing-Sicht nutzvolle Assets mittels Interessen-Ermittlung zu generieren (Personen/Objekte via Bewegungs- Aufenthaltsorts- oder Verweildauerdaten kategorisieren), um diese Personen oder Objekte zu Marktpotenzialen zu konvertieren.

Weitere Vorteile, die das erfindungsgemäße Verfahren zu Analysezwecken mit sich bringt, betreffen eine Optimierung von Aufenthaltsbereichen/-zonen für zum Beispiel besseren Personenfluss oder Evaluierung von relevanten und weniger relevanten Objekten der Bereiche (Stände auf einer Messe, Geräte im Fitnessstudio, Produkte im Einkaufsmarkt).

### Kurzbeschreibung der Zeichnung

Weitere Ziele, Merkmale, Vorteile und Anwendungsmöglichkeiten des erfindungsgemäßen Verfahrens ergeben sich aus der nachfolgenden Beschreibung eines Ausführungsbeispiels anhand der Zeichnung.

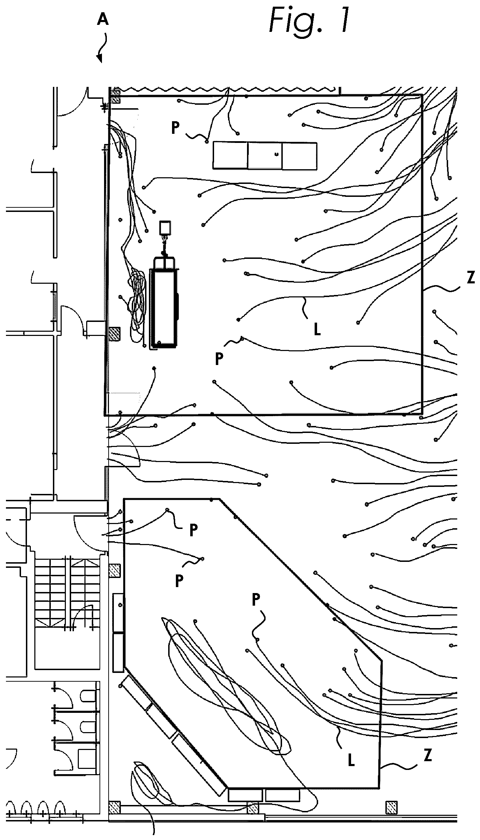

In der Zeichnung zeigt
Fig. 1 eine grafische Darstellung des Verfahrens auf Basis der Aufenthaltsdauer, der Aufenthaltszeitpunkte und/oder der Aufenthaltspositionen einer oder mehrerer Personen und/oder Objekte.

### Ausführung der Erfindung

Wie aus Fig. 1 ersichtlich, sieht eine bevorzugte Ausführungsform des erfindungsgemäßen Verfahrens zur Erfassung von Personen und/oder Objekten in einem zwei- oder dreidimensionalen Aufenthaltsbereich A (in Fig. 1 beispielhaft dargestellt als gesamter Bereich der abgebildeten Fläche) vor, dass eine Visualisierung der Aufenthaltspositionen P einer Person und/oder eines Objekts innerhalb einer Aufenthaltszone Z (in Fig. 1 dargestellt als obere beispielhaft rechteckige Aufenthaltszone Z und untere beispielhaft mehreckige Aufenthaltszone Z) vorzugsweise in Form einer Berichterstellung erfolgt, z. B. durch die Ausgabe von Graphen und Diagrammen, beispielsweise zur Verbesserung von Sicherheitsmaßnahmen.

So ist es vorteilhafterweise vorgesehen, dass auf der Basis der Aufenthaltsdauer, der Aufenthaltszeitpunkte und/oder der Aufenthaltspositionen P einer oder mehrerer Personen und/oder Objekte mindestens eine grafische Darstellung erzeugt wird. Eine solche grafische Darstellung kann mindestens eine Verbindungslinie L von einer Aufenthaltsposition P einer Person und/oder eines Objekts zu einer anderen Aufenthaltsposition P dieser Person und/oder dieses Objekts enthalten.

Wie bereits in den Vorteilen der Erfindung beispielhaft skizziert, sind mögliche Ausführungsformen der Einsatz auf Veranstaltungen/Messen zur Evaluierung der Besuchenden. Hierbei werden für den Veranstalter die interessantesten Bereiche/Stände sowie die Optimierungsbedürftigen Bereiche/Stände dargestellt.

Für den Aussteller werden die Besuchenden in Kategorien aufgeteilt, so dass zum Beispiel Stand XX den Personen und Objektverkehr vor seinem Stand dokumentiert, um dann diese Assets kategorisiert personalisiert anzusprechen.

So können die Aussteller, welche mit Hilfe beispielsweise einer Excel Tabelle die Kontaktdaten erhalten, welche bei Anmeldung zur Veranstaltung übermittelt werden, die Personen kontaktieren oder aber per Außendienst in die Regionen der Personen fahren um POS Marketing zu betreiben. (Vorausgesetzt Wohnort oder Adresse der Arbeitsstelle wurden bei der Anmeldung zu Veranstaltung abgefragt.)

Die Darstellung der Daten kann dabei auf unterschiedliche Arten erfolgen. Neben der Excel Tabelle inklusive aller abgefragten Daten kategorisiert in Gruppen, zum Beispiel in Form von Diagrammen.

## Patentansprüche

1. Verfahren zur Erfassung von Personen- und/oder Objekten in einem zwei- oder dreidimensionalen Aufenthaltsbereich (A), wobei
a) innerhalb des Aufenthaltsbereichs (A) ein oder mehrere Aufenthaltszonen (Z) individuell definierbar und/oder definiert sind, wobei
b) mindestens eine Person und/oder mindestens ein Objekt innerhalb einer definierten Aufenthaltszone (Z) oder mehreren definierter Aufenthaltszonen (Z) mittels mindestens einem Sensor (S) erfasst wird, wobei
c) bei der Erfassung der Person und/oder des Objekts sowohl die aa) die Aufenthaltsposition (P) als auch bb) der Aufenthaltszeitpunkt und/oder die Aufenthaltsdauer der Person und/oder des Objekts innerhalb einer oder mehrerer Aufenthaltszonen (Z) ermittelt wird.

2. Verfahren nach Anspruch 1,
**dadurch gekennzeichnet, dass**
den ermittelten Aufenthaltspositionen (P) der Person und/oder des Objekts während der Erfassung innerhalb des Aufenthaltsbereichs (A) Koordinaten zugewiesen werden, die auf dem Koordinatensystem des Aufenthaltsbereichs (A) festgelegt sind.

3. Verfahren nach Anspruch 1 oder 2,
**dadurch gekennzeichnet, dass**
die Definition der Aufenthaltszonen (Z) innerhalb des Aufenthaltsbereichs (A) durch eine Festlegung mehrerer der jeweiligen Aufenthaltszone (Z) zugewiesener Koordinaten innerhalb eines zwei- oder dreidimensionalen Koordinatensystems des Aufenthaltsbereichs (A) erfolgt.

4. Verfahren nach einem der vorangegangenen Ansprüche,
**dadurch gekennzeichnet, dass**
nach der Ermittlung mehrerer Aufenthaltspositionen (P) und Aufenthaltszeitpunkte einer Person und/oder eines Objekts eine Bestimmung der Aufenthaltsdauer erfolgt.

5. Verfahren nach einem der vorangegangenen Ansprüche,
**dadurch gekennzeichnet, dass**
einer erfassten Person und/oder einem erfassten Objekt individualspezifische Daten zuordbar sind oder automatisch zugeordnet werden.

6. Verfahren nach Anspruch 5,
**dadurch gekennzeichnet, dass**
die Daten nach Kategorien klassifiziert sind, um so eine automatisierte Zuordnung einer erfassten Person und/oder eines erfassten Objekts zu einer bestimmten Kategorie zu ermöglichen.

7. Verfahren nach Anspruch 6,
**dadurch gekennzeichnet, dass**
die Daten personen- oder objektspezifische Merkmale betreffen, welche erfasst und jeder Person oder jedem Objekt individuell zugewiesen werden, um so eine automatisierte Zuordnung einer erfassten Person und/oder eines erfassten Objekts zu einer bestimmten Kategorie zu ermöglichen.

8. Verfahren nach einem der vorangegangenen Ansprüche,
**dadurch gekennzeichnet, dass**
auf der Basis der Aufenthaltsdauer, der Aufenthaltszeitpunkte und/oder der Aufenthaltspositionen (P) von Personen oder Objekten Bewegungsmuster innerhalb einer oder mehrerer Aufenthaltszonen (Z) ermittelt werden.

9. Verfahren nach Anspruch 8,
**dadurch gekennzeichnet, dass**
die Ermittlung der Aufenthaltsdauer, der Aufenthaltszeitpunkte und/oder der Aufenthaltspositionen (P) und die Ermittlung der Bewegungsmuster in Echtzeit erfolgt.

10. Verfahren nach einem der vorangegangenen Ansprüche,
**dadurch gekennzeichnet, dass**
eine dynamische Anpassung der Aufenthaltszonen (Z) in Echtzeit erfolgt.

11. Verfahren nach Anspruch 10,
**dadurch gekennzeichnet, dass**
eine Anpassung der Aufenthaltszonen (Z) in Form einer Ausweitung, einer Verkleinerung und/oder einer Löschung einer vorhandenen Aufenthaltszone (Z) und/oder in Form einer Erstellung einer neuen Aufenthaltszone (Z) erfolgt.

12. Verfahren nach einem der vorangegangenen Ansprüche,
**dadurch gekennzeichnet, dass**
auf der Basis der Aufenthaltsdauer, der Aufenthaltszeitpunkte und/oder der Aufenthaltspositionen (P) hochfrequentierte Aufenthaltszonen (Z) innerhalb des Aufenthaltsbereichs (A) ermittelt werden, in denen gegenüber einer oder mehreren anderen Aufenthaltszonen (Z) eine höhere Anzahl an Personen oder Objekte erfasst werden.

13. Verfahren nach einem der vorangegangenen Ansprüche,
**dadurch gekennzeichnet, dass**
die Erfassung einer Person oder eines Objekts mittels eines betätigbaren und/oder berührungslosen Identifizierungsmittels und/oder Lokalisierungsmittels erfolgt, welche von einem entsprechend ausgestalteten Sensor erfasst werden.

14. Verfahren nach einem der vorangegangenen Ansprüche,
**dadurch gekennzeichnet, dass**
auf Basis der Aufenthaltsdauer, der Aufenthaltszeitpunkte und/oder der Aufenthaltspositionen einer oder mehrerer Personen und/oder Objekte mindestens eine grafische Darstellung erzeugt wird.
